# EUROPEAN PATENT APPLICATION

(11) **EP 4 715 630 A1**
(43) Date of publication of application: **25.03.2026**
(21) Application number: 25202928.5
(22) Date of filing: 18.09.2025
(51) Int. Cl.: G06F 16/35, G06F 16/36

(54) **SYSTEM AND COMPUTER-IMPLEMENTED METHOD FOR INDUCING TAXONOMY AND INFERING THEREFROM**

(30) Priority: 20.09.2024 US 202418891271; 20.09.2024 SE 2430480; 30.07.2025 US 202519285175
(71) Applicant: Quantexa Limited, London EC2M 4AG (GB)
(72) Inventor: Mangla, Shashank, London, EC2M 4AG (GB); Ghalandari, Demian, London, EC2M 4AG (GB); Hokamp, Christopher, London, EC2M 4AG (GB)
(74) Representative: Basck Limited

(57) **Abstract**

Disclosed is a system (100) for inducing taxonomy (504) based on a data sample (202, 404, 604) and an inference classification of raw data (506A) using the induced taxonomy (IT). The system comprises processing arrangement (PA) (106) using set of modules selected from: a segmentation module configured to segment data sample into ontological segments (204); a clustering module configured to cluster ontological segments into ontological clusters (206); a subtree generation module configured to large language model to generate subtree (208, 302) for each ontological cluster; and a taxonomy construction module configured to induce taxonomy comprising root node (210A, 302A, 304A, 702) and combination of subtrees. Moreover, the PA comprises a classification module configured to map IT to set of label configuration objects (504A, 602A-D); and classify raw data using a set of label configuration objects derived from mapped IT. Disclosed also is computer-implemented method for inducing taxonomy based on data sample and inference classification of raw data using IT.

## Description

### TECHNICAL FIELD

The present disclosure relates to systems for inducing taxonomy based on at least one data sample from database arrangements and for inferring classification of a raw data using the induced taxonomy. Moreover, the present disclosure relates to computer-implemented methods for inducing taxonomy on data samples from database arrangements. Furthermore, the present disclosure relates to non-transitory computer-readable storage mediums having computer-readable instructions stored thereon, for implementing the aforesaid computer-implemented methods.

### BACKGROUND

Generally, many applications of natural language processing (NLP) require mapping unstructured text into a specific domain model, known as an ontology. The ontology defines a structured framework for organizing information for a particular use case, such as financial crime detection or fraud detection from unstructured textual data. Such structured representations are crucial for many downstream applications that integrate text processing outputs with other structured data sources based on a fixed schema.

Existing known methods for information extraction and tagging according to a predefined ontology work well when the domain model is known. However, when the domain model is unknown, namely when the relevant prerequisites of the ontology are not known, namely semantic concepts, such as entity types, roles, and relationships, and so forth, are not predefined, then mapping unstructured data into a fixed schema becomes impossible. Moreover, identifying specific semantic concepts from the unstructured textual data is often performed manually, thereby requiring significant expertise and cost, making such identification impractical for large volumes of data.

In this regard, techniques such as unsupervised ontology induction from text and various ontology learning methods have been explored. However, such techniques also rely on predefined ontologies or semi-supervised signals, limiting the applicability of such techniques to domains with unknown schemas. Moreover, the depth and granularity of the generated taxonomies are often insufficient for complex applications. Furthermore, manual dataset annotation in such techniques remains time-consuming and costly.

Therefore, in light of the foregoing discussion, there exists a need to overcome the aforementioned drawbacks.

### SUMMARY

The aim of the present disclosure is to provide a system and an associated computer-implemented method for bootstrapping an ontology from a sample of representative data and for immediately using the resulting ontology to tag new or existing data via a zero-shot or fine-tuned inference pipeline. The aim of the present disclosure is achieved by using a system and an associated computer-implemented method for inducing a taxonomy based on at least one data sample from a database arrangement and inference classification of a raw data using the induced taxonomy as defined in the appended independent claims to which reference is made. Advantageous features are set out in the appended dependent claims.

Throughout the description and claims of this specification, the words *"comprise", "include",* "*have*"*,* and "*contain*" and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 is an illustration of a system for inducing a taxonomy based on at least one data sample from a database arrangement, according to an embodiment of the present disclosure;
FIG. 2 is an illustration of a pipeline depicting inducing a taxonomy based on at least one data sample, according to an embodiment of the present disclosure;
FIGs. 3A to 3C are illustrations of exemplary operations of merging a subtree (or unary tree) into a taxonomy, according to an embodiment of the present disclosure;
FIG. 3D is an illustration of an exemplary operation of cleaning a taxonomy when one or more subtrees are merged into the taxonomy, according to an embodiment of the present disclosure;
FIG. 4 is an illustration of a process for training an LLM for subtree generation and node labelling, according to an embodiment of the present disclosure;
FIG. 5 is an illustration of a pipeline for inference classification of a raw data using an induced taxonomy, according to an embodiment of the present disclosure;
FIG. 6 is an illustration of a pipeline for zero-shot inference classification of a raw data using an induced taxonomy, according to an embodiment of the present disclosure; and
FIG. 7 is an illustration of a pictorial representation of a taxonomy that was induced using crime data using the pipeline for taxonomy induction, according to embodiment of the present disclosure.

### DETAILED DESCRIPTION OF EMBODIMENTS

The following detailed description illustrates embodiments of the present disclosure and ways in which they may be implemented. Although some modes of carrying out the present disclosure have been disclosed, those skilled in the art would recognize that other embodiments for carrying out or practising the present disclosure are also possible.

In a first aspect, the present disclosure provides a system for inducing a taxonomy based on at least one data sample from a database arrangement, the database arrangement comprising a plurality of data records, wherein each of the plurality of data records is associated with at least one concept, the system comprising a processing arrangement, communicably coupled to the database arrangement, using a set of modules selected from:
a segmentation module configured to segment the data sample into ontological segments;
a clustering module configured to cluster the ontological segments into ontological clusters, wherein each ontological cluster is classified as a generic cluster or a specific cluster representing a singular concept;
a subtree generation module configured to use at least one large language model (LLM) to generate at least one subtree for each ontological cluster, wherein each subtree has at least one of: a parent node and a leaf node, and wherein each node is indicative of concept data; and
a taxonomy construction module configured to induce the taxonomy comprising a root node and a combination of the subtrees.

The present disclosure provides the aforementioned system that is able to generate detailed taxonomies of arbitrary length or depth, from unstructured textual data with an ability to go from raw text to a functional inference pipeline without the need of predefined ontologies or manual annotation. Moreover, the processing arrangement makes the detailed taxonomies scalable to large datasets and diverse domains. In this regard, segmentation of the data sample into distinct ontological segments ensures high precision in identifying and categorizing the concepts. Moreover, the clustering module groups the segmented data into the ontological clusters and classify each cluster as either generic or specific, allows for the generation of focused and coherent subtrees, by filtering out noise by identifying generic clusters. Furthermore, by using the large language model (LLM), the subtree generation module is able to adapt to various domains and data types including healthcare, finance, information technology, retail and e-commerce, education and the like.

In a second aspect, the present disclosure provides a system for inference classification of a raw data using an induced taxonomy which has been induced by a system as in the first aspect, the system comprising a processing arrangement comprising a classification module configured to
- map the induced taxonomy to a set of label configuration objects, wherein each label configuration object corresponds to a label in the induced taxonomy; and
- classify the raw data using the set of label configuration objects derived from the mapped induced taxonomy.

Beneficially, the system of the first aspect hierarchically organises discovered concepts into a taxonomy based on the relation concepts exhibit between one other, specifically of a parent-child or sibling relation. Additionally, the system of the second aspect utilizes said induced taxonomies of concepts to appropriately assign these semantic concepts to raw data automatically. Such an approach may work for different users whose data may originate from different categories and sources.

In a third aspect, the present disclosure provides a computer-implemented method for inducing a taxonomy based on a data sample from a database arrangement, the database arrangement comprising a plurality of data records, wherein each of the plurality of data records is associated with at least one concept, the method comprising using a processing arrangement, communicably coupled to the database arrangement, for
segmenting, using a segmentation module, the data sample into ontological segments;
clustering, using a clustering module, the ontological segments into ontological clusters, wherein each ontological cluster is classified as a generic cluster or a specific cluster represents a singular concept;
generating, using a subtree generation module using at least one large language model (LLM), at least one subtree for each ontological cluster, wherein each subtree has at least one of: a parent node and a leaf node, and wherein each node is indicative of concept data; and
inducing, using a taxonomy construction module, the taxonomy comprising a root node and a combination of the subtrees,
and optionally, wherein the method further comprises configuring the processing arrangement for inference classification of a raw data using the induced taxonomy, wherein the processing arrangement comprises a classification module for:
mapping the induced taxonomy to a set of label configuration objects, wherein each label configuration object corresponds to a label in the induced taxonomy; and
classifying the raw data using the set of label configuration objects derived from the mapped induced taxonomy.

The present disclosure provides the aforementioned computer-implemented method for generating detailed taxonomies of arbitrary length and depth, from unstructured textual data with an ability to go from raw text to a functional inference pipeline without the need of predefined ontologies or manual annotation. Moreover, the generation of detailed taxonomies enhances data organization and data retrieval. Furthermore, segmenting the data sample into the ontological segments breaks down complex data into manageable and meaningful parts, ensuring that the clustering process is more precise and focused. Furthermore, the clustering process refines the segmented data by grouping similar segments, which simplifies the data structure and aids in identifying patterns and relationships and create an accurate taxonomy. Furthermore, the taxonomy construction module integrates all subtrees into a cohesive taxonomy, offering a complete and organized representation of the data's conceptual framework and the root node ensures that the taxonomy is easily navigable and logically structured.

In a fourth aspect, the present disclosure provides a non-transitory computer-readable storage media having computer-readable instructions stored thereon, the computer-readable instructions being executable by a processor comprising processing hardware to execute the method of the aforementioned third aspect.

Beneficially, the computer-readable instructions bootstrap an ontology of detailed taxonomies of arbitrary length and depth, from a sample of unstructured textual data. The resulting ontology may be immediately used to tag new or existing data without the need of predefined ontologies or manual annotation, by fine-tuning conventional inference modules.

Throughout the present disclosure, the term *"taxonomy"* refers to a structured classification scheme that organizes information into hierarchical categories based on relationships and characteristics of the information. Typically, the taxonomy may include nodes, hierarchy, relationships, attributes and the like. Advantageously, the taxonomy provides a clear and organized structure for data, improved data retrieval, enhanced scalability, consistency, and better communication. The term *"data sample"* refers to a subset of data records selected from a plurality of data records in the database arrangement. Throughout the present disclosure, the term *"data records"* refers to discrete pieces of data stored in the database arrangement. Typically, the plurality of data records is organized into fields or attributes, which facilitates storage, retrieval, and manipulation within the database. Notably, the plurality of data records represents fundamental building blocks of the database and allows for efficient data management and querying. For example, in a database arrangement of a customer information, the plurality of data records may include fields such as customer ID, name, purchase history, and the like. Typically, the data sample is a representative of entire dataset, corresponding to a given application, and is used as a basis for analyzing and generating the taxonomy. Notably, the data sample is chosen in such a way that the data sample represents various categories, patterns and attributes found within a larger dataset. Beneficially, the data sample reduces computational load and speeds up taxonomy induction process, by reducing the amount of redundant data to be processed.

Optionally, the data sample is a set of at least one of: unstructured text-based data, speech-based data. In this regard, the term *"unstructured text-based data"* refers to a form of text-based data that lacks a predefined structure and is primarily composed of natural language text. Typically, the unstructured text-based data does not adhere to a consistent schema or format and is often found in a free-form format. Notably, the unstructured text-based data may potentially come from a wide range of sources, such as emails, social media posts, documents, books, chat logs and the like. The term *"speech-based data"* refers to the information that is derived from human speech, typically captured through audio recordings. Notably, the speech-based data encompasses spoken words, intonations, pitch, pace and other acoustic features of speech. Moreover, examples of the speech-based data include voice recordings, podcasts, voicemail messages, speech transcripts, audiobooks and the like. In this regard, the system may potentially use natural language processing (NLP) techniques such as tokenization, named entity recognition, topics modelling, part-of-speech tagging and the like to analyze the unstructured text-based data or speech-based data converted to text-based data.

In this regard, optionally, the system further comprises a speech-to-text converter to generate data for the system to process. In this regard, the term "*speech-to-text converter*" refers to a speech recognition software (such as OpenAI's Whisper) that converts spoken language into written text by utilizing automatic speech recognition technology to convert spoken words into text, and subsequently the text may be processed using a trained neural network, which provides improved recognition of accents, background noise and jargon. Typically, the speech-to-text converter receives the speech as input through a microphone on a computer, phone or a recording device. Notably, the software uses complex algorithms to analyze sound waves of speech (for example, by using one or more parsing algorithms). The algorithms identify individual sounds (phonemes) that make up the words and then combine the individual sounds to recognize the spoken words. Subsequently, the processed speech is converted into the written text, which may be saved for further processing.

A technical effect of using text-based or speech-based data sample is to broaden applicability of the system by enabling creation of the taxonomy from domains where the information is primarily communicated through text messages, emails or spoken conversations. Moreover, a technical effect of using the speech-to-text converter is to save time by allowing a user to dictate text instead of typing the text manually. Furthermore, the speech-to-text converters are helpful for users with disabilities who have difficulty in typing or using a keyboard.

The term "*database arrangement*" refers to a structured organization of a collection, storage and management of data or information within a database in a way that it may be easily accessed, retrieved, managed, and updated. The database is designed to handle large amounts of data and provide mechanisms for querying, updating, and manipulating that data. Typically, the database arrangement organizes the data in the form of tables, columns and the like. Notably, the database arrangement may include, but are not limited to, NoSQL database, MySQL, PostgreSQL, document-oriented database such as JSON or BSON, graph databases such as Neo4j, hierarchical database arrangement such as IBM Information Management System (IMS) and the like. Advantageously, the system automates the process of building the taxonomy by analyzing the at least one data sample from the database arrangement, thereby reducing manual effort and cost involved in traditional taxonomy induction. Moreover, the system retrieves the at least one data sample from the database arrangement and uses algorithms such as machine learning techniques to analyze the at least one data sample. The analysis may include techniques such as identifying keywords, detecting relationships between concepts, clustering similar concepts and the like. For example, consider the database arrangement containing millions of medical records, each associated with various concepts such as diseases, treatments, patient demographics, and so forth. The at least one data sample may, for example, consist of thousands of records selected to represent diversity of conditions and treatments within the database. The data sample would then be used to induce the taxonomy that categorizes medical terms into hierarchical structures, thereby aiding in medical research, diagnosis, and treatment planning.

Optionally, the data sample is received from the database arrangement based on a user query received via a computing device associated with a user. In this regard, the term "*user query*" refers to a request or a question posed by a user via the computing device. Optionally, the user query is a text-based user input or a speech-based user input, which may be converted to a text-based query at a backend for further processing by the processing arrangement. Typically, the user query is composed of keywords, phrases or structured command that conveys the user's need or the user wants to accomplish.

The term "*computing device*" refers to an electronic device that processes data and performs tasks according to a set of instructions or software programs. Typically, the computing device may include personal computers, mobile devices, tablets, wearable devices and the like. Moreover, the computing device facilitates the user to receive user query as an input from the user and provide said user query to the system for further processing thereof. The term "*user"* refers to an individual or an entity that interacts with the computing device to perform tasks, access information or to utilize services provided by the system. Typically, the user is an end consumer and is responsible for initiating the queries within the system. Furthermore, the retrieval of the data sample from the database arrangement ensures that the data retrieved is relevant to the user's needs, based on the specific user query. Beneficially, by using the user query to guide the data retrieval, the system may focus on providing precise and relevant information and enhancing efficiency. Additionally, the query-based retrieval minimizes time and resources spent on accessing large datasets, thus reducing latency and increasing user satisfaction.

The term *"concept"* refers to an abstract idea or a category that provides a meaningful classification for each of the plurality of data records. Notably, the at least one concept serves as a tag, a topic, or a label that encapsulates essence or primary subject matter of each of the plurality of data records. Moreover, the at least one concept provides context to the data, aiding in understanding and interpretation of the data. Advantageously, the at least one concept facilitates systematic organization of large volumes of data. Furthermore, each of the plurality of data records is tagged with the at least one concept. For example, a data record containing patient information such as medical history, diagnoses, treatments, and test results. Such data record may be associated with concepts like "diabetes", "cardiology", "medication", and "surgery", respectively.

Optionally, the at least one concept for a given domain includes at least one of: entity types, relationships between the entity types, roles of the entity types, and labels. In this regard, the term *"domain"* refers to a specific area of interest or field of study to which the plurality of data records or specifically, the at least one data sample, pertains. For example, the domain may be for a particular use case, such as financial crime detection, or fraud detection, and so on. Notably, the domain provides contextual framework for the system, ensuring that the at least one concept is organized and analysed in a manner that is relevant to a specific field of interest, namely the domain. The term *"entity types"* refers to categories and classes of concepts, objects or phenomena within the given domain that is represented in the plurality of data records or the at least one data sample. Typically, the entity types are defined based on the specific domain of interest, ensuring relevance and applicability. For example, in the given domain of financial crime detection, entity types refer to "person", "organisation", and the like. The phrase *"relationships between the entity types"* refers to connections and associations that exists between the different entity types. For example, the relationships that exist between the entity types may be such as "person X is sibling of person Y", "person X works for company Y", and the like. Typically, the relationships between the entity types are defined based on the given domain and the at least one data sample being analysed. The phrase *"roles of the entity types"* refers to specific functions or positions that the entity types fulfil within the plurality of data records or the at least one data sample. For example, the roles of the entity types may be "perpetrator of crime", "law enforcement officer" and the like. The term *"labels"* refers to identifiers or tags assigned to the plurality of data records or the at least one data sample within the taxonomy to categorize the data. Notably, the labels may be topic-level labels such as "report of arrest", "court document transcription" and the like. Advantageously, the labels facilitate easy identification and classification of the data. Furthermore, the at least one concept for a given domain ensures comprehensive representation and understanding of the at least one concept within the given domain by providing detailed classification of the unstructured data. Furthermore, to identify the entity types, various categories of entities relevant to the domain is identified from the at least one data sample, and thereafter the relationships and interactions between different entity types is identified therefrom. Subsequently, specific roles or function associated with each entity type within the given domain are identified and labels are associated with such entity types and the roles and responsibilities thereof to tag and categorize entities for better organization of the data. A technical effect is to provide a detailed and structured representation of the plurality of data records or the data sample within the given domain, making it easier to understand and manage the plurality data records. Furthermore, the at least one concept for the given domain enables more thorough and accurate analysis by providing a complete picture of the entities, relationships between the entities and the roles within the given domain.

Throughout the present disclosure, the term "*processing arrangement*" refers to a computational arrangement that is operable to execute instructions, such as instructions related to computational semantics and natural language processing. Examples of the processing arrangement include, but are not limited to, a microprocessor, a microcontroller, a processor, a complex instruction set computing (CISC) microprocessor, a reduced instruction set (RISC) microprocessor, a very long instruction word (VLIW) microprocessor, a Field Programmable Gate Array (FPGA), or any other type of processing circuit. Furthermore, the processing arrangement may refer to one or more individual servers, processing devices and various elements associated with a processing device that may be shared by other processing devices. Additionally, one or more individual processors, processing devices and elements are arranged in various architectures for responding to and processing the instructions that execute the instructions of the taxonomy induction. Moreover, by being communicably coupled to the database arrangement, the processing arrangement may be responsible for performing various operations (such as analysis, transformation, and the like) on the plurality of data records stored in the database arrangement. Optionally, the processing arrangement is communicable coupled with the database arrangement through various means such as network connections, application programming interface (APIs), direct data access methods and the like.

Throughout the present disclosure, the term *"set of modules"* refers to a collection of distinct software or hardware components within the system that work together to perform the task of inducing the taxonomy from the database arrangement. Notably, each module from the set of modules focuses on a particular aspect of the taxonomy induction process. Examples of the set of modules may include the segmentation module, the clustering module, the subtree generation module and the taxonomy construction module, and the like.

Optionally, the set of modules use machine learning algorithms, and are trained using at least one of: unsupervised learning techniques, semi-supervised learning techniques, supervised learning techniques. In this regard, the term *"machine learning algorithms"* refers to a computational method or set of rules designed to identify patterns in the at least one data sample and make predictions or decisions without being explicitly programmed for tasks such as inducing taxonomy. The term *"unsupervised learning techniques"* refers to techniques or algorithms that are used to analyze and interpret data sets without predefined labels or explicit instructions. Notably, the unsupervised learning techniques aim to identify patterns, structures, and relationships within input data, without the need for user intervention to label or categorize the data beforehand. Moreover, the machine learning algorithms such as K-means, PCA and the like are used to segment the data into meaningful groups. Advantageously, the unsupervised learning technique facilitates understanding of that data where labels are not available or too costly to obtain. The term *"semi-supervised learning techniques"* refers to a learning technique that utilizes both labeled and unlabeled data for training of the set of modules. Notably, the semi-supervised learning techniques aim to improve learning accuracy and performance of the set of modules that are using machine learning algorithms, by leveraging the small amount of labeled data and the large amount of unlabeled data available. Moreover, the set of modules are initially trained on the labeled data to build a basic model, thereafter, the basic model is used to label the unlabeled data. The newly labeled data is added to the training set in an iterative process. Moreover, techniques such as self-training, co-training and graph-based are commonly used herein. The term *"supervised learning techniques"* refers to that learning technique where the set of modules are trained on a labeled dataset. Typically, in the supervised learning techniques each training input is paired with an output label. Moreover, the supervised learning techniques are used to predict outcomes based on input data and widely applicable to various tasks such as classification, regression and the like. Beneficially, the training of machine learning algorithms using various learning techniques allows for flexibility and robustness in handling different types of data and learning scenarios. By incorporating multiple types of learning, the system may be more adaptive and effective in inducing the taxonomy from diverse datasets. A technical effect is the ability to use the semi-supervised and unsupervised learning techniques to function well even when the labeled data is scarce or sparse. Furthermore, combining different learning techniques may lead to better generalization and improved performance of the machine learning models.

Throughout the present disclosure, the term *"segmentation module"* refers to a module that processes the at least one data sample and segments or categorizes the text in the at least one data sample into ontological segments, such that each segment exhibits a single theme or topic. Notably, the segmentation module's configuration may be adjusted based on the domain of the data sample, type of documents, desired granularity of resulting taxonomy. For example, if the data sample is tweets, the processing arrangement may treat each tweet as a single segment. In another example, if the data sample is news articles, the processing arrangement may assume that top N sentences have sufficient information to represent topics covered in the news article and treat each article as a single segment consisting of top N sentences.

The term *"ontological segments"* refers to portions of the data sample that are segmented based on thematic and conceptual content of the data sample. Typically, the ontological segments of the data in the data samples represent a specific concept or topic within the given domain. Advantageously, the ontological segments are crucial for creating a structured representation of the data from the unstructured data sample. Furthermore, the segmentation of the data sample is necessary to organize the unstructured data into manageable data aligned with specific topics. Therefore, if the segmentation module is required to break a data sample into smaller segments, it will do so in such a way that each resulting segment represents a single concept. The label pertaining to the concept is obtained later in the pipeline.

Throughout the present disclosure, the term *"clustering module"* refers to a module that is responsible for organizing the ontological segments generated by the segmentation module into meaningful groups or clusters. Herein, the clustering module uses mathematical algorithms to identify the patterns and similarities among the ontological segments. Typically, each ontological cluster formed by the clustering module represents a group of ontological segments that share common characteristics, themes, or topics. Moreover, the clustering module may use various algorithms such as K-means, density-based clustering (HDBSCAN), hierarchical clustering and the like. Beneficially, the clustering module cluster the ontological segments into ontological clusters to identify prevalent topics clusters in the data sample and discard noises from the ontological clusters. The term *"ontological cluster"* refers to a group of ontological segments that are organized based on semantic similarity or thematic coherence within a particular domain or ontology. Typically, the ontological clusters are formed by the clustering module from the ontological segments. The term "*generic cluster*" refers to a group of ontological segments with a database arrangement that represents a general concept within the given domain. Typically, the generic cluster may include segments such as financial markets, business trends, financial frauds, and the like in the domain of financial analysis. The term "*specific cluster*" refers to a group of ontological segments within the database arrangement that represents a singular or particular concept within the given domain. For example, in the domain of financial analysis, the specific cluster may include segments discussing "stock market trends", "corporate earnings reports", "macroeconomic indicators" and the like. Moreover, unlike the generic clusters, the specific cluster is more narrowly defined. The term *"singular concept"* refers to a distinct and unique idea that is represented within the specific cluster of ontological segments. Typically, the singular concept encapsulates a focused area of information, making it easier to categorize, analyze, and understand the data related to a given concept. Beneficially, the generic cluster and the specific cluster offer more detailed and granular representation of the concept present in the dataset. Furthermore, the aforementioned algorithms used by the clustering module analyze the semantic features of the ontological segments and identify patterns to form the ontological clusters.

Optionally, the clustering module is further configured to execute at least one of:
to separate outlier data from the ontological clusters, based on a density-based clustering algorithm;
to remove generic nodes from the ontological clusters; and
to de-duplicate n-1 type nodes, from amongst the plurality of nodes, representing the singular concept while retaining an n^{th} node representing the singular concept, optionally, wherein the n^{th} node and the n-1 type nodes are leaf nodes.

In this regard, the term *"outlier data"* refers to data points that do not fit well into any cluster due to being in low density regions. Typically, the outlier data may include noise, errors, anomalies or rare occurrences, and the like. Notably, the outlier data fails to conform to the patterns observed in the ontological clusters. The term *"density-based clustering algorithm*" refers to a type of unsupervised machine learning algorithm used to identify the clusters within a dataset by analyzing the density of data points in the given space. Typically, the density-based clustering algorithm (such as HDBSCAN, DBSCAN (Density-based spatial clustering of applications with noise), and the like) group together the datapoints that are closely packed and separate out the datapoints that lie in low-density regions which are considered outliers or noise. Additionally, the density-based clustering algorithm produces clusters of arbitrary shapes due to focus on density. Beneficially, removing the outlier segments from the ontological clusters ensures that the clusters accurately represent main trends in the data.

The term "*generic nodes*" refers to nodes within the ontological clusters that represents generic topics. Typically, the generic nodes encompass general information that is not specific to be useful for the structuring of the data. Beneficially, by removing the generic nodes from the ontological clusters, the remaining nodes represent the specific characteristics of the cluster more accurately. Moreover, the clustering module identifies the generic nodes within the ontological clusters and evaluates the relevance of the generic nodes within the taxonomy. Subsequently, the clustering module removes the identified generic nodes from the ontological clusters to retain the specific and relevant nodes. The term *"de-duplication"* refers to the process of identification and removal of duplicate nodes within the ontological clusters. Optionally, the de-duplication may be performed by using a vectorizer such as INSTRUCTOR during the clustering process, that produces task-specific embeddings. In this regard, the embeddings or vectors (used interchangeably) refer to a numerical representation of the text information (such as, phrases of text, sentences, paragraphs and the like), expressed as fixed-size vectors in a continuous vector space. It will be appreciated that other type of data such as numerical data and the like, can be vectorized as well. Beneficially, the purpose of the de-duplication is to identify the n-1 type nodes that represents duplicate instances of singular or same concept and removes the n-1 nodes while retaining the n^{th} node. Herein, the n^{th} node represents one unique instance of the singular concept, for example, a taxonomy of products in an e-commerce database. The plurality of nodes may represent the same product concept, such as "Smartphone Model X". The de-duplication process involves identifying all nodes labelled as "Smartphone Model X". thereafter retaining one instance of "Smartphone Model X" (the n^{th} node) and removing all other instances (the n-1 type nodes). By doing this, the taxonomy becomes more streamlined, with only one node representing "Smartphone Model X," reducing confusion and improving the efficiency of searches and analyses. Optionally, the nodes being de-duplicated may be leaf nodes. The leaf nodes are nodes at the end of branches in a tree structure, with no child nodes. Advantageously, the de-duplication of the n-1 type nodes from the plurality of nodes is able to improve the performance of the processing arrangement and retrieval operations. A technical effect is a cleaner, more organized taxonomy that requires less computational resources for processing and querying the data. Furthermore, the user is able to navigate and understand the taxonomy more easily, thereby improving the user experience.

Optionally, the clustering module is configured to use pair-wise clustering for the plurality of nodes, and wherein the pair-wise clustering is based on a cosine similarity between each pair of the plurality of nodes. In this regard, the term *"pair-wise clustering"* refers to a clustering approach that focuses on evaluating and grouping pairs of datapoints based on similarity or distance from each other. Typically, the pair-wise clustering is calculated through metrices such as Euclidean distance, cosine similarity, and the like. The term *"cosine similarity"* refers to a measurement type used to determine the similarity between each pair of the plurality of nodes in the ontological clusters. Typically, the cosine similarity calculates cosine angle between each pair of the plurality of nodes, which represents orientation rather than magnitude of the cosine angle between each pair of the plurality of nodes. Notably, the cosine similarity is computed using the all-mpnet-base-v2 model provided by sentence-transformers (sentence_transformers/all-mpnet-base-v2). It will be appreciated that the sentence-transformers such as BERT-based sentence-transformers, DistilBERT-based sentence-transformers, MiniLM model, XLM-RoBERTa-based sentence-transformers and the like can be used to convert the information into the vectors or embeddings. Optionally, the INSTRUCTOR model can also be used in place of the sentence-transformers to convert the text into task specific embeddings. Beneficially, the cosine similarity is crucial in applications where understanding and organizing information based on meaning is important. In an embodiment, the plurality of nodes T = T₁, T₂, ........., Tₙ, wherein the plurality of nodes represents text documents, that are transformed into vector representation such as TF-IDF vectors. The clustering module performs the pair-wise clustering based on the cosine similarity. For each text Tᵢ ∈ T, the cosine similarity sim(Tᵢ, Tⱼ) is computed against every other text Tⱼ E T, where i ≠ j and i,j = 1,2,...,n. Two nodes, Tᵢ and Tⱼ, are added to the same cluster if sim(Tᵢ, Tⱼ) exceeds a predefined threshold θ, wherein the predefined threshold θ is a parameter to be selected by the user or the processing arrangement. The aforementioned process is applied pairwise for the plurality of nodes in T, grouping the nodes into the clusters based on semantic similarity and a controllable predefined threshold θ. From each cluster, retain the first node and discard all other nodes. A technical effect of the pair-wise clustering is to provide a detailed and accurate assessment of node similarities, leading to more precise clusters. Furthermore, the semantic grouping based on cosine similarity enhances the quality of clusters in terms of content relevance and cohesion.

Throughout the present disclosure, the term "*subtree generation module*" refers to a generation module within the system that is responsible for generating subtrees from the clusters of data. The term "*subtree*" refers to a portion of a larger hierarchical tree structure. In a taxonomy, which is a hierarchical classification system, is often represented as a tree structure, nodes represent categories or entities, and the relationships between these nodes illustrate the hierarchical structure. Such hierarchical tree structure includes a parent node and descendant nodes, namely the child nodes or leaf nodes. Typically, the at least one subtree represents clusters of related concepts organized in a hierarchical manner. Notably, the subtree starts with a parent node and includes all leaf nodes (and/or child nodes) that are specific concepts related to the parent node. Advantageously, the subtree generation allows the system to handle large volumes of data and complex taxonomies more efficiently.

The term "*parent node*" refers to a node within the taxonomy that has one or more leaf (and/or child) nodes directly or indirectly beneath the parent node in the hierarchy. Typically, the parent node represents a broader category that encompasses the categories or entities represented by its leaf (and/or child) nodes. A child node is a node that is directly connected and subordinate to another node, called its parent node. Child nodes represent more specific categories or entities that fall under the broader category of the parent node. The term "*leaf node*" refers to a terminal node in a taxonomy that does not have child nodes. Typically, during construction of the taxonomy, leaf nodes are identified and placed at the ends of branches connected to parent nodes. Notably, the leaf node represents the most specific category or entity within the cluster. The term "*concept data*" refers to information or attributes associated with a specific concept within the taxonomy. Typically, the concept data provides necessary context and details that distinguish the concept from other concepts. Beneficially, the concept data is essential for clarifying and identifying the unique characteristics of the concept.

Optionally, the concept data includes at least one of: a concept label, a phrase-type description of the concept; a definition of the concept, and a detailed description of the concept, a parent or leaf node label, a phrase-type description of the parent or leaf node label. Herein, the term *"concept label"* refers to a concise identifier or a name assigned to a specific concept within the taxonomy. Typically, the concept label encapsulates the essence of the concept. Beneficially, the concept label provides a quick and easy way to refer to the specific concept without needing to use a lengthy description or definition. The term "*phrase-type description*" refers to a brief, descriptive sentence or set of phrases that provides a more detailed and informative depiction of the concept. Beneficially, the phrase-type description provides additional context that helps the user to understand the concept more comprehensively compared to a single-word concept label. The term "*definition*" refers to a precise and formal description that explains the meaning, scope, and essential attributes of the concept within the taxonomy. Typically, the definition of the concept provides a clear and unambiguous explanation of what the concept represents. The term "*detailed description*" refers to a comprehensive information about the concept, including the characteristics, properties, attributes, and contextual relevance within a given domain. Typically, the detailed description of the concept may include various aspects such as examples, use cases, synonyms, antonyms, related concepts, and practical implications. The term "*parent or leaf node label*" refers to an identifier or descriptive label assigned to a node within the taxonomy. Typically, the parent or leaf node label helps to identify the position of the node within the taxonomy. The phrase "*phrase-type description of the parent or leaf node label*" refers to a textual description or phrase that provides additional context or information about the parent node or the leaf node within the taxonomy. Notably, the description complements the label assigned to the node, offering further details about the meaning, relevance, or characteristics. Beneficially, clear labels and descriptions facilitate the user to navigate through the taxonomy more effectively. Additionally, each concept in the taxonomy is assigned a label for quick identification. A technical effect of both the brief and detailed descriptions is to provide different levels of information about the concepts, and to enhance the user's understanding about the taxonomy. Furthermore, the standardized concept data ensures that the taxonomy is consistent and reliable, which is crucial for maintaining data integrity.

The term "*large language model*" refers to an artificial intelligence language model designed to understand and generate subtrees by understanding the text data by identifying the concepts therein. Typically, the at least one LLM is trained on vast amounts of text data. However, the LLM as used herein is fine-tuned and trained using a limited set of data sample. Moreover, the subtree generation module uses at least one large language model (LLM) to convert each topic cluster into a subtree that constitutes taxonomy. Furthermore, by generating the subtrees, the system organizes the concepts in a hierarchical manner and facilitates understanding the structure and relationships within the data. The subtree generation module takes the ontological clusters as input and each cluster contains segments of data that are thematically related. Subsequently, the at least one LLM processes the data within each cluster to understand relationships and hierarchies among the concepts. The at least one LLM identifies the parent node (broader concepts) and the leaf node (specific concepts). Thereafter, based on the at least one LLM's understanding, the subtree generation module constructs the at least one subtree where each node represents the concept data. Furthermore, output of the at least one LLM consists of a label, a two-to-three-word description of the topic. Optionally, the output of the at least one LLM consist of a description, a single sentence description of the topic, a parent label and a leaf label, a two-to-three-word description of the parent label and the leaf label. Beneficially, the at least one LLM automates the process of subtree generation, thereby reducing manual effort and increasing efficiency.

Throughout the present disclosure, the term "*taxonomy construction module*" refers to a software module that is responsible for building or constructing the taxonomy based on input documents. Typically, the taxonomy construction module play role in organizing and structuring the information derived from the database arrangement into a hierarchical taxonomy. Moreover, the taxonomy construction module arranges the concepts and entities into the hierarchical structure consisting of the parent and the leaf nodes. The taxonomy construction module combines a plurality of subtrees into a single tree to induce the taxonomy. The term "*root node*" refers to a topmost node in the hierarchical taxonomy constructed by the taxonomy construction module. Notably, the taxonomy initializes from the root node, hence, the root node serves as a starting point. Moreover, the root node provides an overarching framework within which the other nodes are organized and classified. It must be appreciated that the root node may be a taxonomic root node or a subtree root node depending on the hierarchy it is a part of.

Optionally, the taxonomy construction module is configured to iterate over each subtree and to add it to the root node or a node of a previously added subtree in the taxonomy,
and wherein when it is determined that a node of a given subtree is similar to a node in the taxonomy, the taxonomy construction module is configured to add the children of given node as children of the similar node in the taxonomy,
and wherein when it is determined that no node of a given subtree is not similar to a node in the taxonomy, the taxonomy construction module is configured to add the given subtree below the root node in the taxonomy.

In this regard, the taxonomy construction module induces the taxonomy by constructing the taxonomy hierarchy. The taxonomy hierarchy starts with creation of the root node representing the most general concept of the taxonomy. Thereafter, the taxonomy construction module iterates over each subtree and adds each to the taxonomy one at a time. Optionally, for each subtree, the taxonomy construction module traverses its nodes in a bottom-up manner, starting with the leaf node. If a similar node is found in the taxonomy, add the node's child tree as a child of the similar node in the taxonomy. In other words, if a node (the specific concept) of a subtree is similar to an existing node in the taxonomy, then the node's children are added below the existing node, maintaining the hierarchical structure. Moreover, to find the similar node, the taxonomy construction module uses the cosine similarity of node's descriptions. It will be appreciated that the system allows the induced taxonomy to have arbitrary depth, allowing leaf nodes with common parents to become siblings and also leaf nodes to become ancestors of other leaf nodes, if applicable, and thus labelled as child nodes to the corresponding parent nodes.

However, if the leaf node is not similar to any existing node, indicating a new concept, then the subtree is added below the root node to create a new branch in the taxonomy. A technical effect is to ensure that the taxonomy is dynamically constructed based on the similarity of concepts. Furthermore, addition of the subtrees to the appropriate nodes based on the similarity enhances the coherence of the taxonomy and creates a structured taxonomy.

Optionally, the taxonomy construction module is further configured to refine the taxonomy by performing:
an elimination of a node that is not a leaf node in a subtree; and
wherein the node comprises a single child node.

Optionally, the taxonomy construction model is further configured to refine the taxonomy by replacing the eliminated node with the single child node.

In this regard, the taxonomy module refines the taxonomy after the subtrees are combined using a CombineSubtrees algorithm. Moreover, the taxonomy construction module cleans up the taxonomy by removing certain leaf nodes that were originally part of the taxonomy but are not associated with the newly generated subtrees. Optionally, the taxonomy module replaces the single node in the taxonomy with the entire subtree to provide more detailed and structured representation of the single node's concept. Advantageously, the elimination of the first set of leaf nodes ensures that the taxonomy remains current and relevant by removing outdated or irrelevant leaf nodes. Furthermore, replacement of the single node enhances the granularity and depth of the taxonomy, providing more detailed and organized information by replacing a single concept node with a subtree that offers a more comprehensive representation. Furthermore, the taxonomy module evaluates the existing leaf nodes in the taxonomy to identify the first set of leaf nodes that do not correspond to the new subtrees generated from the current data sample. Subsequently, such first set of leaf nodes are removed. Optionally, the taxonomy module identifies the single node in the taxonomy that may be better represented by the subtree. Thereafter, the taxonomy module replaces the single node with the corresponding subtrees. A technical effect is that by removing the first set of leaf nodes that no longer correspond to the subtrees, the taxonomy is kept up-to-date and free from outdated information. Moreover, eliminating irrelevant nodes prevents the taxonomy from becoming overcrowded with unnecessary information, improving its clarity and usability. Additionally, the replacement creates a more organized and hierarchical structure, facilitating easier navigation and understanding of the taxonomy.

Optionally, the taxonomy construction module is further configured to assign scores to a given pair of nodes, each pair of nodes being selected from the plurality of nodes and the root node or the node of a previously added subtree in the taxonomy, and wherein based on the assigned scores, it is determined that the given pair of nodes is similar when the assigned score is higher than a predefined threshold.

In this regard, the term "*scores"* refers to a similarity score in terms of a numerical value, that the taxonomy construction module assigns to the given pair of nodes within the taxonomy. Typically, the similarity score is compared to a predefined threshold parameter φ. The term "*predefined threshold"* refers to a specific, predetermined value used as a benchmark to evaluate the similarity between the pairs of nodes. Typically, the predefined threshold is set before the similarity evaluation process begins and serves as a cutoff point to determine whether two nodes are considered similar enough to be grouped together or treated as related. Notably, the predefined threshold is established based on domain knowledge, empirical data, or specific requirements of the taxonomy construction process. Notably, the purpose of assigning the scores to the pair of nodes is to quantify the relationship or similarity between the pair of nodes. Beneficially, the scores may assist in decisions about merging nodes, restructuring parts of the taxonomy, or identifying which nodes to eliminate or replace. Moreover, the taxonomy construction module is configured to select the pair of nodes for scoring. The pair of nodes may be from the raw data being integrated (plurality of nodes) or existing nodes (the root nodes or nodes of previously added subtrees) in the taxonomy. In this regard, the taxonomy module uses a scoring algorithm to evaluate the similarity between each pair of nodes. The score is based on the attributes such as labels, descriptions and the like, of the pair of nodes. Subsequently, if the score of the pair of nodes exceeds the predefined threshold, then the nodes deemed similar. A technical effect is that the similar nodes may be merged or appropriately linked within the taxonomy to reduce redundancy and improve the structure of the taxonomy.

Optionally, the taxonomy construction module uses a cosine similarity between each pair of nodes. In this regard, the taxonomy construction module leverages the cosine similarity to evaluate the similarity between each pair of nodes during the construction of the taxonomy. Moreover, using the cosine similarity facilitates in quantifying the semantic similarity between nodes, ensuring that the taxonomy accurately reflects the relationships and hierarchy within the data. Furthermore, using the cosine similarity between each pair of nodes provides a computationally efficient way to compare large sets of textual data. Furthermore, each node, amongst the each pair of nodes, is converted into a vector using techniques such as Term Frequency-Inverse Document Frequency (TF-IDF) or word embeddings. The similarity score is compared against a predefined threshold. If the score exceeds this threshold, the nodes are considered similar. A technical effect is that by using the cosine similarity, the taxonomy construction module is precisely able to group semantically similar nodes together and ensures that the hierarchical relationships within the taxonomy are based on actual semantic similarities.

Optionally, an interface module is configured to provide the induced taxonomy on the computing device associated with a user. In this regard, the term *"interface module"* refers to a software component that facilitates communication and interaction between the system and the computing device of the user. Typically, the interface module act as an intermediary that allows the system and the computing device to exchange information, commands, or requests in a standardized manner. Moreover, the purpose of the interface module is to ensure that the user may access and interact with the induced taxonomy on the computing device associated with the user. Advantageously, providing the induced taxonomy in a user-accessible format allows the user to understand, navigate and utilize the structured data efficiently. Furthermore, the interface module acts as an intermediary that connects backend system, where the taxonomy is generated, with a backend and/or front-end of the user's computing device. The interface module retrieves the induced taxonomy from the system and renders the induced taxonomy in a format that is comprehensible and accessible on the user's computing device. A technical effect is that the interface module ensures that the user is able to access and utilize the structured data, which improves usability and accessibility of the system. Furthermore, the user may access the most up-to-date taxonomy data in real-time, ensuring that the user is working with latest information.

The present disclosure also relates to the system for inference as described above. Various embodiments and variants disclosed above, with respect to the aforementioned system for inducing a taxonomy based on at least one data sample, apply mutatis mutandis to the system for inference.

Throughout the present disclosure, the term *"raw data"* refers to previously unseen or unprocessed data that is an input into the system for classification. Typically, the raw data is not part of the original data sample used to create the induced taxonomy but is intended to be categorized based on the induced taxonomy. The raw data is typically the dataset onto which an ontology based on the original data has not yet been applied. Such raw data is not yet processed, structured, or enriched with the semantic information or annotations provided by an ontology. It remains in its original, unstructured, or less structured form, thus also referred to as "unannotated data". Typically, the classification module consists of specific functionalities that allow to map the induced taxonomy to the set of label configuration objects corresponding to the raw data, for classifying raw data using an induced taxonomy.

Moreover, the term *"set of label configuration objects"* refers to a set label configuration objects representing a label from the taxonomy. Typically, the set of label configuration objects may include necessary data and criteria for classifying raw data according to the taxonomy. Moreover, each label is represented by a JSON object that includes metadata about the label such as label's name, id, context examples and descriptive text templates for the zero-shot classification. Furthermore, mapping the induced taxonomy to the set of label configuration objects transforms an abstract taxonomy into actionable components that may be used by the inference classification system. Furthermore, the mapping allows for easy updates and modifications to the classification criteria without needing to alter the entire taxonomy. Furthermore, the inference system analyzes the induced taxonomy to identify all the labels and the relationship amongst the set of label configuration objects. For each label in the taxonomy, a corresponding label configuration object is created. The set of label configuration objects includes label name, attributes, roles, parent-child relationships within the taxonomy. Thereafter, each label in the induced taxonomy is mapped to the corresponding label configuration object systematically. Subsequently, the label configuration objects are integrated into the system's classification module to be used in data classification processes.

Notably, the classification module utilizes machine learning techniques and predefined taxonomies to ensure accurate and efficient classification. The term *"inference classification"* refers to a process of assigning a category or label to the raw data based on the induced taxonomy. Notably, the process of inference classification involves utilizing the relationships, nodes, and definitions established in the induced taxonomy to determine the most appropriate classification for the raw data. Moreover, the classification module performs zero-shot inference classification, classification using knowledge distilled models and the like for inference classification Beneficially, inference classification of the raw data shows that the induced taxonomy may be used beyond the initial dataset, indicating the system's robustness and versatility. Moreover, the inference classification allows the system to classify the raw data in real-time, supporting dynamic and continuous data streams.

Moreover, the set of label configuration objects derived from the mapped induced taxonomy, used to classify the raw data. The classification module utilizes the zero-shot inference classification or the distilled classification models that may classify data using a static label set that are derived from an induced taxonomy. The label configuration objects serve as the rules and criteria for determining how raw data should be categorized according to the established taxonomy. Furthermore, depending on whether the system classifies roles, relations, or topics, the classification input will be a sentence and a specific entity, a sentence and a pair of entities, or a whole document. For example, when classifying whether an entity has a "perpetrator of fraud" role in a sentence, we use the sentence as the premise and render the hypothesis based on the template of the label configuration object. Advantageously, classifying the raw data using the label configuration objects is essential to automate the classification process, making the classification process faster and less prone to error. Furthermore, the system accesses the set of label configuration objects derived from the mapped induced taxonomy. For each piece of raw data, the system applies the rules and criteria defined in the relevant label configuration objects to determine the appropriate label such as matching criteria, hierarchical criteria and the like. Thereafter, based on the matching process, the system assigns the appropriate labels to the raw data and provides a robust and flexible framework for data management.

Optionally, the classification module is pre-trained on natural language inference (NLI) model to label the raw data according to the set of label configuration objects. In this regard, the term *"natural language inference model"* refers to a model that is designed to determine the logical relationship between pairs of text segments, typically a premise and a hypothesis. Notably, the natural language inference-based zero shot models are trained to classify a pair of (premise, hypothesis) statements into true, false or inconclusive, depending on whether the hypothesis logically follows from the premise. Advantageously, the NLI model is essential for various natural language processing tasks as it helps the machines to understand and interpret human language in a way that mimics human reasoning. Furthermore, the NLI model enhances the performance of downstream applications such as sentiment analysis, question answering, and text summarization. Furthermore, the NLI model is trained on large datasets consisting of text pairs annotated with the logical relationships. The NLI model learns to extract and encode features from the text pairs that are indicative of entailment, contradiction, or neutrality. Furthermore, the classification module receives a premise and hypothesis as input and compares the features of the premise and hypothesis to determine the relationship. Subsequently, the classification module outputs a classification label (entailment, contradiction, or neutral) based on the set of label classification objects. A technical effect is to accurately classify the raw data and to improve the precision of applications that rely on understanding text relationships. Furthermore, the NLI model may be applied to tasks such as information retrieval, conversational agents, and automated reasoning.

Optionally, the processing arrangement further comprises a pre-trained transformer language model configured to perform a multi-label text classification of a first data according to the classified raw data, wherein the first data is received after classification of the raw data. In this regard, the term *"pre-trained transformer language model"* refers to a deep learning model that is based on the transformer architecture such as Generative Pre-trained Transformer (GPT-4) and trained on a large corpus of text data. Typically, the pre-trained transformer language model is essential in the natural language processing (NLP). The term *"multi-label text classification"* refers to a machine learning classification where each text document may be assigned multiple labels or categories simultaneously. Typically, the multi-label text classification is common in fields of content tagging, email filtering, medical diagnosis, financial frauds and the like. The term *"first data"* refers to an input data that the system receives after the initial classification of the raw data. Typically, the first data is analyzed in the context of previously classified data (raw data) to ensure that the classification process is informed and accurate. Moreover, the pre-trained transformer language model involves first labelling a large collection of documents using the zero-shot approach with fixed taxonomies. The pre-training involves tasks like predicting missing words (masked language modeling) or the next sentence in a sequence (next sentence prediction). The annotated dataset is then used to fine-tune the pre-trained transformer language model to do the multi-label text classification using the labels of the fixed taxonomy. A technical effect of using the pre-trained transformer models is to improve the accuracy of NLP tasks by leveraging learned language patterns and contextual information.

Optionally, the pre-trained transformer language model is configured to predict scores for each of the set of label configuration objects corresponding to the first data, simultaneously. In this regard, predicting the scores for each label configuration object simultaneously allows the system to efficiently handle multi-label classification tasks. The pre-trained transformer language model is able to directly predict the scores for all possible labels of the taxonomy simultaneously given the first data, rather than classifying each input-label pair separately. Typically, the scores represent the likelihood or relevance of each label to the first data, usually in the form of probability scores. Moreover, the pre-trained transformer language model receives the first data (text) as input. The model processes the first data using attention layers and generates output scores for each label configuration object. Subsequently, a set of scores corresponding to each label configuration object is produced, indicating the relevance of each label to the first data. A technical effect of predicting the scores for each of the set of label configuration objects is to reduce the running time of the classification module.

The present disclosure also relates to the computer-implemented method as described above. Various embodiments and variants disclosed above, with respect with respect to the aforementioned system and the aforementioned system for inference, apply mutatis mutandis to the computer-implemented method.

The present disclosure also relates to the non-transitory computer-readable storage media as described above. Various embodiments and variants disclosed above, with respect with respect to the aforementioned system, the aforementioned system for inference, and computer-implemented method apply *mutatis mutandis* to the non-transitory computer-readable storage media.

### DETAILED DESCRIPTION OF THE DRAWINGS

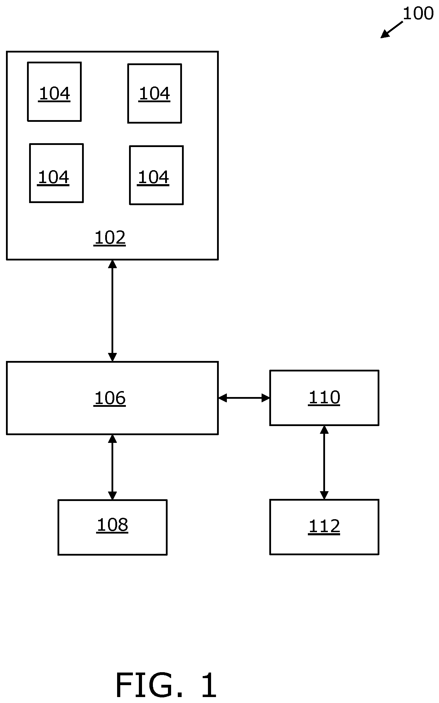

Referring to FIG. 1, there is shown an illustration depicting a system **100** for inducing a taxonomy based on at least one data sample from a database arrangement **102,** according to an embodiment of the present disclosure. Herein, the database arrangement **102** comprises a plurality of data records **104,** wherein each of the plurality of data records **104** is associated with at least one concept. The system **100** comprises a processing arrangement **106,** communicably coupled to the database arrangement **102,** using a set of modules selected from:
a segmentation module configured to segment the at least one data sample into ontological segments;
a clustering module configured to cluster the ontological segments into ontological clusters, wherein each ontological cluster is classified as a generic cluster or a specific cluster representing a singular concept;
a subtree generation module configured to use at least one large language model (LLM) to generate at least one subtree for each ontological cluster, wherein each subtree has at least one of: a parent node and a leaf node, and wherein each node is indicative of concept data; and
a taxonomy construction module configured to induce the taxonomy comprising a root node and a combination of the subtrees.

As shown, the system **100** further comprises a speech-to-text converter **108** to generate data for the system **100** to process; and an interface module **110** configured to provide the induced taxonomy on a computing device **112** associated with a user.

Moreover, the system **100** is further configured for inference classification of a raw data using an induced taxonomy. In this regard, the processing arrangement **106** comprises a classification module configured to map the induced taxonomy to a set of label configuration objects, wherein each label configuration object corresponds to a label in the induced taxonomy; and classify the raw data using the set of label configuration objects derived from the mapped induced taxonomy.

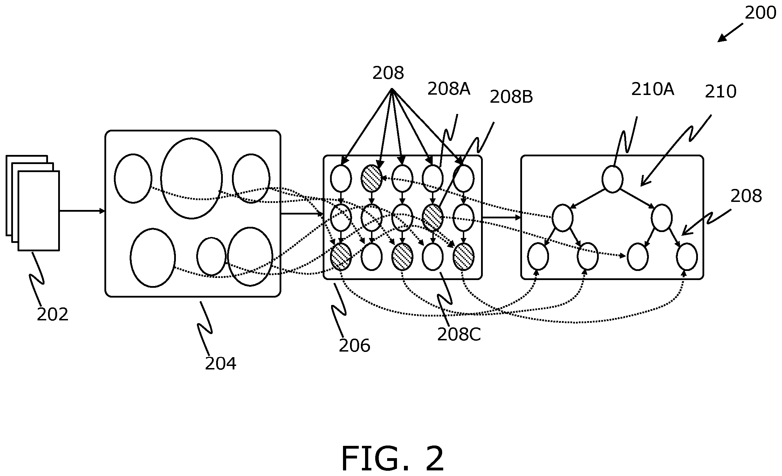

Referring next to FIG. 2, there is shown an illustration of a pipeline **200** depicting inducing a taxonomy based on at least one data sample **202,** according to an embodiment of the present disclosure. As shown, the pipeline **200** initiates with input of a collection of unstructured textual documents, namely at least one data sample **202** which are segmented into ontological segments **204** based on a domain of the data, type of documents and intended granularity of the taxonomy. The ontological segments **204** are subsequently clustered into ontological clusters **206,** wherein each ontological cluster is classified as a generic cluster or a specific cluster representing a singular concept or topic. The ontological clusters **206** are subsequently processed to generate at least one subtree **208** for each ontological cluster **206,** wherein each subtree has at least one of: a parent node **208A** and a leaf node **208C,** and wherein each node is indicative of concept data. Finally, a single tree **210** is generated to induce the taxonomy comprising a root node **210A** and a combination of the subtrees **208,** wherein the taxonomy is of arbitrary granularity, as shown.

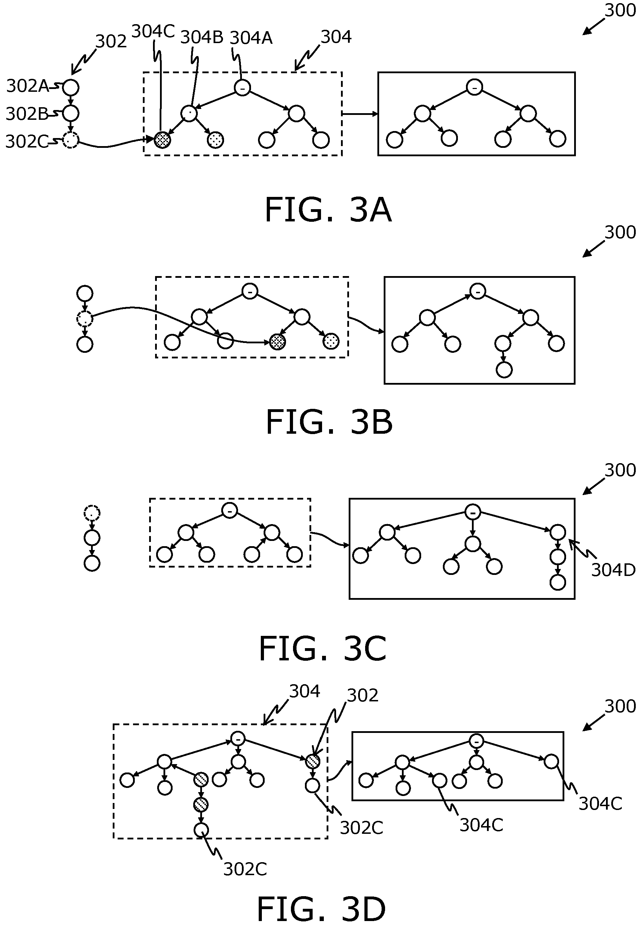

Referring to FIGs. 3A to 3C, there is shown an illustration of exemplary operations **300** of merging a subtree **302** (or unary tree) into a taxonomy **304,** according to an embodiment of the present disclosure. As shown, a subtree **302** comprises three nodes **302A-C,** namely a subtree root node **302A,** a subtree parent node **302B** and a subtree leaf node **302C.** One of the three nodes that is currently being processed is depicted as a dotted node.

As shown in FIG. 3A, the dotted node **302C** is evaluated for a potential merging thereof to the taxonomy **304** that is depicted in a dashed box. As shown, the taxonomy **304** comprises a subtree having a root node **304A** (depicted with a '-' within the node), a plurality of nodes comprising a parent node **304B** and multiple leaf nodes, such as the leaf node **304C.** The shaded parent node **304B** or leaf nodes **304C** from amongst the multiple leaf nodes, have similarity to the dotted leaf node **302C,** higher than a predefined threshold. Herein, the denser shaded leaf nodes have higher similarity to the dotted leaf node **302C** as compared to the lightly shaded parent node. Since the dotted leaf node **302C** is a subtree leaf node and matches one or more shaded parent node **304B** or leaf nodes **304C** from amongst the multiple leaf nodes **304C** in the taxonomy **304,** the resulting taxonomy **306** depicted in a solid box remains unchanged after the merging of the subtree tree **302** to the taxonomy **304.**

As shown in FIG. 3B, the dotted parent node **302B** is evaluated for a potential merging thereof to the taxonomy **304** that is depicted in a dashed box. As shown, the taxonomy **304** comprises a subtree having a root node **304A,** a plurality of nodes comprising a parent node **304B** and multiple leaf nodes **304C.** The shaded leaf nodes **304C** from amongst the multiple leaf nodes have similarity to the dotted parent node **302B,** higher than a predefined threshold. Herein, the denser shaded leaf node has higher similarity to the dotted parent node **302B** as compared to the lightly shaded node. Since the dotted parent node **302B** is a subtree parent node and matches one or more shaded leaf nodes from amongst the multiple leaf nodes in the taxonomy **304,** the resulting taxonomy **306** depicted in a solid box includes a leaf node **302C** of the dotted parent node **302B** added as a leaf node of the denser shaded leaf node in the taxonomy **304.**

As shown in FIG. 3C, the dotted root node **302A** is evaluated for a potential merging thereof to the taxonomy **304** that is depicted in a dashed box. As shown, the taxonomy **304** comprises a subtree having a root node **304A,** a plurality of nodes comprising a parent node **304B** and multiple leaf nodes, such as the leaf node **304C.** Since the dotted root node **302A** is a subtree root node and it does not match any leaf nodes from amongst the multiple leaf nodes **304C** in the taxonomy **304,** the resulting taxonomy **306** depicted in a solid box includes the subtree **302** as a parent node **304D** of the taxonomy root node **304A** in the taxonomy **304.**

Referring to FIG. 3D, there is shown an exemplary operation **300** of cleaning a taxonomy **304** when one or more subtrees **302** are merged into the taxonomy **304,** according to an embodiment of the present disclosure. As shown, once one or more subtrees **302** are merged into the taxonomy **304,** that is depicted in a dashed box, nodes which have single children which are not originally subtree leaf nodes **302C** (depicted as shaded nodes) are identified for removal from the taxonomy **304.** The resulting taxonomy **306** depicted in a solid box includes the subtree leaf nodes **302C** as taxonomy leaf nodes **304C** in the taxonomy **304.**

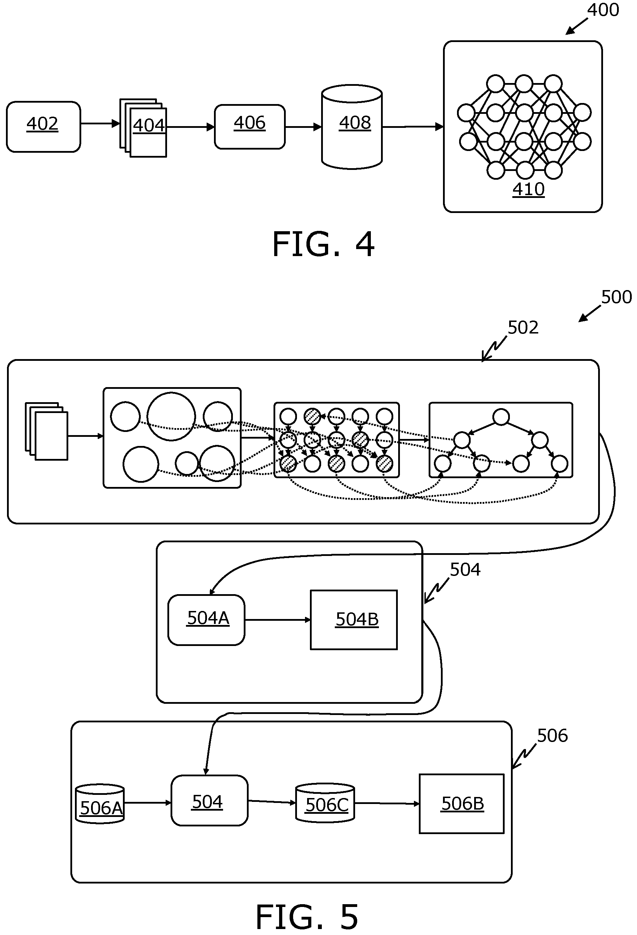

Referring to FIG. 4, there is shown an illustration of a process **400** for training an LLM **410** for subtree generation and node labelling, according to an embodiment of the present disclosure. As shown, the process **400** is initiated with receiving from various sources **402** a plurality of data records and selecting therefrom a data sample **404.** The data sample **404** is segmented into ontological segments that are labelled into ontological clusters using an LLM such as Generative Pre-trained Transformer (GPT-4) **406** (OpenAI *et al.,* 2024) for example. The resulting labelled dataset **408** is used to train an LLM **410,** such as *Mistral-7B-v0.1* model (Jiang *et al.,* 2023) for topic labelling task to generate at least one subtree for each ontological cluster.

Referring to FIG. 5, there is shown an illustration of a pipeline **500** for inference classification of a raw data using an induced taxonomy **502,** similar to the pipeline **200** for taxonomy induction of FIG. 2, according to an embodiment of the present disclosure. As shown, for inference classification of a raw data using the induced taxonomy **502,** a processing arrangement, similar to the processing arrangement **106** of the system **100** of FIG. 1, utilizes a classification module configured to map the induced taxonomy to a set of label configuration objects **504A,** wherein each label configuration object **504A** corresponds to a label in the induced taxonomy **502;** and classify the raw data using the set of label configuration objects **504A** derived from the mapped induced taxonomy **502.** In this regard, as shown, the classification module performs a zero-shot inference classification model **504** (using conventional zero-shot classification models **504B** that are pre-trained on natural language inference (NLI) tasks to label inputs (namely, raw data) according to the labelled objects during taxonomy induction of FIG. 2) of a raw data **506A** using the induced taxonomy **502,** or classification model distillation process **506** (i.e. fine-tuning a model using raw data labelled with the zero-shot inference classification model **504**), **506C** is raw data labelled by the zero-shot classification model **504** and **506B** is the resulting distilled or fine-tuned model.

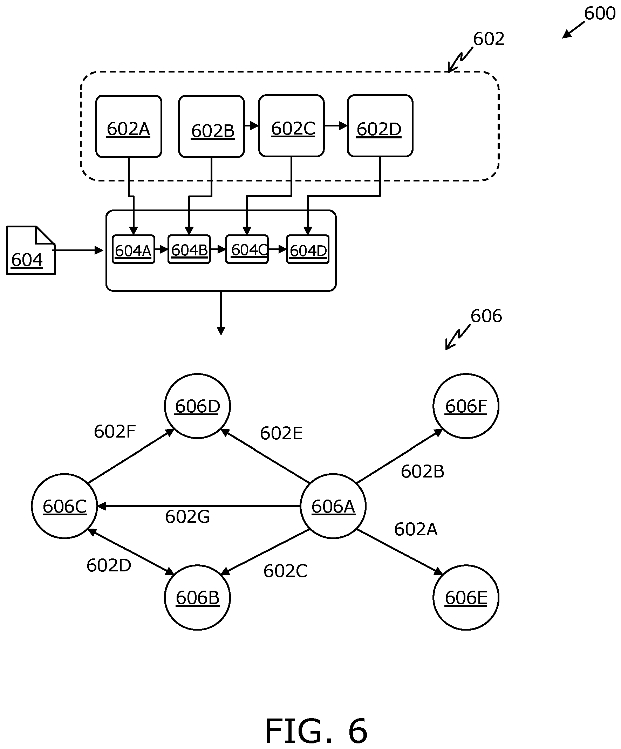

Referring to FIG. 6, there is shown an illustration of a pipeline **600** for zero-shot inference classification of a raw data using an induced taxonomy **602,** according to an embodiment of the present disclosure. As shown, induced taxonomy **602** comprises a set of label configuration objects **602A-D,** namely topics **602A** (for example, "financial crime detection", "fraud detection from streams of unstructured textual data"), entity type **602B** (for example, "person", "organization" and the like), roles **602C** (for example, "perpetrator of crime", "law enforcement officer" and the like) of the entity types, relationships **602D** (for example, person 'x' is sibling of person 'y', person 'x' works for company 'y' and the like") between the entity types. An input to the pipeline is a data sample **604,** namely one or more documents. Each word, sentence, entity detail (name, role, relation, etc.) in the input data **604A-D** is mapped to a corresponding set of label configuration objects **602A-D,** one for each label configuration objects **602A, 602B, 602C or 602D** in the induced taxonomy **602.** Herein, the classifier is applied to each combination of input and candidate label. Based on the aforementioned mapping, a pictorial representation **606** of mapping data is generated.

As shown, the pictorial representation **606** of mapping data comprises 6 nodes, namely "Document" **606A,** "Entity 1" **606B,** "Entity 2" **606C,** "Entity 3" **606D,** "Department 1" **606E,** and "Department 2" **606F.** As depicted, the "Entity 1" **606B,** "Entity 2" **606C** and the "Entity3" **606D** are derived from the "Document" **606A,** wherein the "Entity 1" **606B** has a "perpetuator of fraud" role **602C** in a sentence in the "Document" **606A.** Thus, the zero-shot inference classification, that is based on NLI, uses the sentence as the premise and renders the hypothesis based on the template of the set of label configuration objects **602A-D,** e.g., "{{Entity 1 **606B**}} is involved in fraudulent activities.". Similarly, the "Entity 2" **606C** has a "perpetuator of fraud/business person role **602G** and "co-conspirator role 602D, acquainted with the perpetrator of fraud 602C, Entity 1 **606B"** role in one or more sentences in the "Document" **606A,** and the "Entity 3" **606D** has a "target of lawsuit", role **602E** in one or more sentences in the "Document" **606A.** Moreover, the Entity 2 **606C** has a "founder" **602F** relationship with Entity 3 **606D;** therefore, the zero-shot inference classification uses the sentences as the premise and renders the hypothesis based on the template of the set of label configuration objects **602A-D**, for example:
*"{{Entity 2 **606C**}} is involved in fraud and co-conspirator in the fraudulent activities with the "Entity 1 **606B**"."* and
the Entity 3 **606D** is a target for a lawsuit as the Entity 2 **606C** is the founder of the Entity 3 **606D.**

Moreover, the "Department 2" **606E,** for example Department of Healthcare Fraud, is notified of a given sentence "healthcare fraud" **602A** in the "Document" **606A,** and the "Department 3" **606F;** for example, Department of Crime is notified of a given sentence "crime" **602B** in the "Document" **606A,** based on the template of the set of label configuration objects **602A-D,** e.g., "{{Entity 1 **606B**}} is involved in a financial fraud."

Moreover, the zero-shot inference classified data with fixed taxonomies is further used to train fine-tune a pre-trained transformer language model to do multi-label text classification using the labels of the fixed taxonomy. At inference time, such classifier directly predicts scores for all possible labels of a taxonomy simultaneously given an input, rather than classifying each input-label pair separately, which reduces the running time.

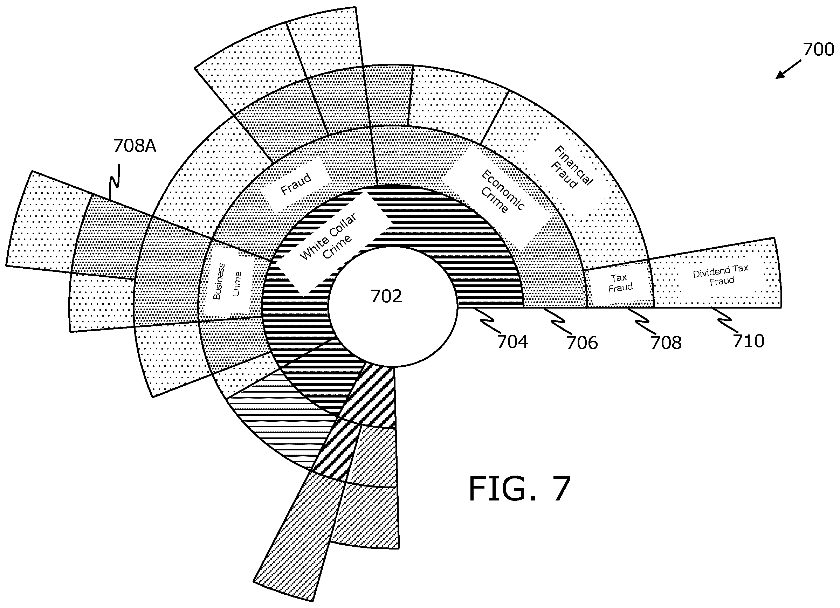

Referring next to FIG. 7, there is shown an illustration of a pictorial representation **700** of an inference classification of a crime data using an induced taxonomy, according to an embodiment of the present disclosure. As shown, the central area of the pictorial representation **700** represents a root node **702.** The first layer around the root node **702** represents a parent node **704.** The parent node **704** includes major classifications of the crime data, such as 'White Collar Crime', 'Political Crime', 'Computer/Cyber Crime', 'Property Crime', and so on. The second layer around parent node **704** represents the leaf nodes **706.** As shown, the leaf node **706** includes sub-classifications of the 'White Collar Crime' such as 'Economic Crime', 'Fraud', 'Business Crime', 'Corporate Fraud', 'Bribery and Corruption', and 'Employment Fraud'. Moreover, the leaf node **706** further includes secondary leaf nodes **708,** tertiary leaf nodes **708A,** and an end leaf nodes **710.** Herein, the secondary leaf node **708** include super-sub-classification of the Economic Crime' such as 'Tax Fraud' which further has an end leaf node **710** such as 'Dividend Tax Fraud'. Herein, the secondary leaf node **708** function as an end leaf node **710** to include super-sub-classification of the Economic Crime' such as Financial Fraud' which do not have any further secondary, tertiary, and any end leaf nodes, identified yet.

In summary, FIG.7 provides overview of the collected crime data. A taxonomy induction pipeline is then ran on the collected crime data and thus provides a taxonomy of business crime topics, which is then subsequently visualised in a pictorial representation of the results.

The pictorial representation in in the form of a radial chart, wherein each "layer" of the radial chart is a level of the tree. Level 0 is the root node. White Collar Crime is on level 2 and so on. Each level has one or more nodes. White Collar Crime is a single node.

A node with no children, is known as leaf node. So "Dividend Tax Fraud" and "Financial Fraud" in FIG. 7 are leaf nodes since they have no children.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A system (100) configured to induce a taxonomy (304) based on at least one data sample (202, 404, 604) from a database arrangement (102), the database arrangement comprising a plurality of data records (104), wherein each of the plurality of data records is associated with at least one concept, the system comprising a processing arrangement (106), communicably coupled to the database arrangement, using a set of modules selected from:
- a segmentation module configured to segment the data sample into ontological segments (204);
- a clustering module configured to cluster the ontological segments into ontological clusters (206), wherein each ontological cluster is classified as a generic cluster or a specific cluster representing a singular concept;
- a subtree generation module configured to use at least one large language model (LLM) (410) to generate at least one subtree (208, 302) for each ontological cluster, wherein each subtree has at least one of: a parent node (208A, 302B, 304B, 704) and a leaf node (208B, 302C, 304C, 706, 708), and wherein each node is indicative of concept data; and
- a taxonomy construction module configured to induce the taxonomy comprising a root node (210A, 302A, 304A, 702) and a combination of the subtrees.

2. A system (100) according to claim 1, wherein the data sample (202, 404, 604) is a set of at least one of: unstructured text-based data, speech-based data.

3. A system (100) according to claims 1 or 2, further comprising a speech-to-text converter (108) to generate data for the system to process.

4. A system (100) according to any of the preceding claims, wherein the at least one concept for a given domain includes at least one of: entity types (602B), relationships (602D) between the entity types, roles (602C) of the entity types, and labels.

5. A system (100) according to any of the preceding claims, wherein the concept data includes at least one of: a concept label, a phrase-type description of the concept; a definition of the concept, and a detailed description of the concept, a parent or leaf node label, a phrase-type description of the parent or leaf node label.

6. A system (100) according to any of the preceding claims, wherein the clustering module is further configured to execute at least one of:
- to separate outlier data from the ontological clusters (206), based on a density-based clustering algorithm;
- to remove generic nodes from the ontological clusters; and
- to de-duplicate n-1 type nodes, from amongst the plurality of nodes, representing the singular concept while retaining an nth node representing the singular concept, optionally, wherein the nth node and the n-1 type nodes are leaf nodes (208B, 302C, 304C, 706, 708).

7. A system (100) according to any of the preceding claims, wherein the clustering module is configured to use pair-wise clustering for the plurality of nodes, and wherein the pair-wise clustering is based on a cosine similarity between each pair of the plurality of nodes.

8. A system (100) according to any of preceding claims, wherein the taxonomy construction module is configured to iterate over each subtree (208, 302) and to add it to the root node (210A, 302A, 304A, 702) or a node of a previously added subtree in the taxonomy (304),
and wherein when it is determined that a node (208B, 302C, 304C, 706) of a given subtree is similar to a node in the taxonomy, the taxonomy construction module is configured to add the children of given node as children of the similar node in the taxonomy,
and wherein when it is determined that no node of a given subtree is not similar to a node in the taxonomy, the taxonomy construction module is configured to add the given subtree below the root node in the taxonomy;
and optionally
wherein the taxonomy construction module is further configured to refine the taxonomy (304) by performing :
- an elimination of a node that is not a leaf node (208B, 302C, 304C, 706, 708) in a subtree (208, 302), and
Wherein node comprises a single child node;
and optionally
wherein the taxonomy construction module is further configured to refine the taxonomy (304) by replacing the eliminated node with a single child node;
or
wherein the taxonomy construction module is further configured to assign scores to a given pair of nodes, each pair of nodes being selected from the plurality of nodes and the root node (210A, 302A, 304A, 702) or the node of a previously added subtree (208, 302) in the taxonomy (304), and wherein based on the assigned scores, it is determined that the given pair of nodes is similar when the assigned score is higher than a predefined threshold;
or
wherein the taxonomy construction module uses a cosine similarity between each pair of nodes.

9. A system (100) according to any of the preceding claims, wherein the set of modules use machine learning algorithms, and are trained using at least one of: unsupervised learning techniques, semi-supervised learning techniques, supervised learning techniques.

10. A system (100) according to any of the preceding claims, wherein the data sample is received from the database arrangement (102) based on a user query received via a computing device (112) associated with a user.
and optionally
a system (100) further comprising an interface module (110) configured to provide the induced taxonomy on the computing device (112) associated with a user.

11. A system (100) for inference classification of a raw data (506A) using an induced taxonomy which has been induced by a system as in any preceding claim, the system comprising a processing arrangement (106) comprising a classification module configured to
- map the induced taxonomy to a set of label configuration objects (504A, 602A-D), wherein each label configuration object corresponds to a label in the induced taxonomy; and
- classify the raw data using the set of label configuration objects derived from the mapped induced taxonomy;
and optionally
wherein the classification module is pre-trained on natural language inference (NLI) model to label the raw data (506A) according to the set of label configuration objects (504A, 602A-D).

12. A system (100) according to claim 11, wherein the processing arrangement (106) further comprises a pre-trained transformer language model configured to perform a multi-label text classification of a first data according to the classified raw data, wherein the first data is received after classification of the raw data (506A).

13. A system (100) according to claim 12, wherein the pre-trained transformer language model is configured to predict scores for each of the set of label configuration objects (504A, 602A-D) corresponding to the first data, simultaneously.

14. A computer-implemented method for inducing a taxonomy (304) based on a data sample (202, 404, 604) from a database arrangement (102), the database arrangement comprising a plurality of data records (104), wherein each of the plurality of data records is associated with at least one concept, the method comprising using a processing arrangement (106), communicably coupled to the database arrangement, for
- segmenting, using a segmentation module, the data sample into ontological segments (204);
- clustering, using a clustering module, the ontological segments into ontological clusters (206), wherein each ontological cluster is classified as a generic cluster or a specific cluster represents a singular concept;
- generating, using a subtree generation module using at least one large language model (LLM) (410), at least one subtree (208, 302) for each ontological cluster, wherein each subtree has at least one of: a parent node (208A, 302B, 304B, 704) and a leaf node (208B, 302C, 304C, 706), and wherein each node is indicative of concept data; and
- inducing, using a taxonomy construction module, the taxonomy comprising a root node (210A, 302A, 304A, 702) and a combination of the subtrees (208, 302),
and optionally, wherein the method further comprises configuring the processing arrangement for inference classification of a raw data (506A) using the induced taxonomy (502, 602), wherein the processing arrangement comprises a classification module for:
- mapping the induced taxonomy to a set of label configuration objects (504A, 602A-D), wherein each label configuration object corresponds to a label in the induced taxonomy; and
- classifying the raw data using the set of label configuration objects derived from the mapped induced taxonomy.

15. A non-transitory computer-readable storage media having computer-readable instructions stored thereon, the computer-readable instructions being executable by a processor comprising processing hardware to execute a method of claim 20.
